Europäisches Patentamt

European Patent Office

Office européen des brevets

(19)

(11) **EP 1 072 903 A1**

(12) **EUROPEAN PATENT APPLICATION**

(43) Date of publication:
**31.01.2001 Bulletin 2001/05**

(51) Int Cl.⁷: **G01V 3/32**, G01V 11/00,
E21B 17/10, E21B 47/01,
E21B 17/07, E21B 4/18

(21) Application number: **99305970.8**

(22) Date of filing: **27.07.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **OXFORD INSTRUMENTS (UK) LIMITED**
**Eynsham, Witney, Oxon OX8 1TL (GB)**

(72) Inventor: **The designation of the inventor has not yet been filed**

(74) Representative: **Skone James, Robert Edmund**
**GILL JENNINGS & EVERY**
**Broadgate House**
**7 Eldon Street**
**London EC2M 7LH (GB)**

(54) **Apparatus for nuclear magnetic resonance measuring while drilling a borehole**

(57)     An apparatus for drilling a borehole and determining a parameter of interest of a formation surrounding a borehole during drilling. The apparatus comprises:

(a) a longitudinal member (1) adapted to be conveyed in a borehole; and
(b) a sensor assembly (54) including:

(i) at least one NMR sensor for making NMR measurements relating to the parameter of interest, the sensor comprising a magnetic field generating assembly an RF antenna and a plurality of ferrite members (9,10) which couple with RF magnetic fields transmitted or received by the RF antenna;
(ii) at least one clamping device (50) for engaging the borehole to clamp the sensor assembly to the borehole.

The sensor assembly (54) is mounted via bearings (51) to the longitudinal member (1) so that the longitudinal member is free to move when the sensor assembly is engaged with the borehole.

Fig. 1

Printed by Jouve, 75001 PARIS (FR)

**Description**

The present invention relates to apparatus for drilling a borehole and determining a parameter of interest of a formation surrounding a borehole during drilling.

A measurement-while-drilling tool is described in EP-A-0581666 (Kleinberg). The tool comprises a tubular drill collar; a drill head positioned at an axial end of the drill collar; and an NMR sensor. The NMR sensor comprises a pair of tubular main magnets (which generate a static ($B_0$) magnetic field) each located in an internal recess of the drill collar, and an RF antenna located in an external recess in the drill collar between the main magnets. The RF antenna recess is optionally filled with a magnetically soft ferrite to improve the efficiency of the antenna.

An NMR well logging system is described in US-A-4629986 (Clow et al.). A pair of main magnets are separated by a gap in which a solenoid RF antenna is symmetrically disposed. The solenoid has a core of high permeability ferrimagnetic material (soft ferrite).

A problem with the prior art systems is that dimensional resonances can be induced in the ferrite by the RF electromagnetic field. This absorbs energy and reduces RF efficiency.

A further problem with prior art systems is that radial and axial displacements of the drill collar during the NMR measurement sequence can degrade the accuracy of the measurements.

In accordance with the present invention there is provided apparatus for drilling a borehole and determining a parameter of interest of a formation surrounding a borehole during drilling comprising

(a) a longitudinal member adapted to be conveyed in a borehole; and
(b) a sensor assembly including:

(i) at least one NMR sensor for making NMR measurements relating to the parameter of interest, the sensor comprising a magnetic field generating assembly, an RF antenna, and a plurality of ferrite members which couple with RF magnetic fields transmitted or received by the RF antenna;
(ii) at least one clamping device for engaging the borehole to clamp the sensor assembly to the borehole;

wherein the sensor assembly is mounted via bearings to the longitudinal member so that the longitudinal member is free to move when the sensor assembly is engaged with the borehole.

In one aspect of the invention, the drill bit is mounted on a rotating drillstring and a special segment of the drill pipe is included in the drillstring. The special segment of drill pipe incorporates a rotating central core that rotates with the drill string and a sensor assembly that is slidably attached to the central core. The sensor assembly is provided with a clamping mechanism that can clamp the assembly to the borehole, decoupling the sensor assembly from the rotation of the drillstring. In a second embodiment, the sensor assembly is mounted between two sets of substantially non-rotating rib steering devices or stabilizers on the drillstring and is provided with a clamping mechanism to couple it to the borehole wall and is also provided with a gap that separates it from the rotating central core: this arrangement reduces the vibrations of the sensor assembly still further. In both embodiments, magnetic and inertial sensors are incorporated in the NMR sensor to provide information on the orientation and motion of the measurement sensors. A telemetry systems sends information downhole about the depth of the drilling assembly. A microprocessor downhole combines the depth and azimuth information with the measurements made by the magnetic and inertial sensors, uses redundancy in the data to improve S/N ratio, compresses the data and sends it uphole by a telemetry system or stored downhole for later retrieval.

Further modifications of the sensor assembly are described in more detail in EP-99300373.0 incorporated herein by reference.

The apparatus may be a logging-while-drilling (LWD) or formation-evaluation-while-drilling (FEWD) tool in which the NMR information relating to the formation is stored on in-board memory for retrieval when the tool is returned to the surface. Alternatively a telemetry system may be provided and the NMR information is used to control the drill in real time (i.e. steering).

The ferrite has the unavoidable effect of reducing the inner diameter of the working volume in comparison with similar sized logging tools using permanent magnet shims as described by Hanley in US5471140 and EP-A-0774671. This results in a loss of penetration depth. However this is less of a disadvantage in a MWD tool because the invasion of the formation by borehole fluids occurs slowly after drilling. The MWD tool generally arrives at the formation less than an hour after cutting, whereas a wireline tool can arrive days or weeks later. As a result there will be less borehole fluid in the formation under study and so the use of ferrite is particularly suited to a MWD tool.

Furthermore a typical MWD tool has a larger radius than a comparable wireline tool. Since the $B_0$ strength scales approximately as the second power of the magnet mean radius, it is possible to space the main magnets farther apart in an MWD tool using larger diameter main magnets and thus regain some of the penetration depth.

A primary consideration in the design of an NMR MWD tool is making the NMR measurement insensitive to the effect of lateral tool motions, such as vibration and whirl. To a first approximation it is clear that it will not be possible to re-focus the NMR signal in the sensitive region if the tool is displaced laterally (i.e. in a direction parallel to the radius) during the pulse sequence by a distance which is a significant proportion of the radial thickness of the sensitive shell. Large axial displacements of the sensor due to drilling vibrations will cause a similar problem. It is therefore necessary to select a $B_0$ optimisation scheme and RF bandwidth such that the shell thickness and length is much larger than the maximum expected lateral and axial displacement. Little is known about the precise motions of drilling tools down hole, but the typical range of displacement is from 1 to 10mm at frequencies of a few Hz. Rotation periods are between 1 and 3Hz. The typical NMR measurement lasts from 50ms to 1s, so these motions are significant. However, the flexible nature of the sensor according to the present invention ensures that it is possible to design a tool with a sensitive shell thicker than the maximum expected motion. The tool described in the preferred embodiment has a shell with a radial thickness about 20mm and axial length about 50mm.

However, a detailed analysis of the NMR measurement reveals that even these precautions are not enough under severe drilling conditions. Even if the lateral and axial motion of the tool is a small fraction of the dimensions of the sensitive volume, the NMR echo train will display features that are dependent on tool motion rather than properties of the formation rocks under investigation. This is because, during the course of a measurement sequence, the static magnetic field moves with the drill so that the magnetic field seen by the nuclei under examination, which are fixed in relation to the formation is no longer time invariant. This causes a progressive dephasing of the NMR echoes and an additional unwanted decay component in the echo amplitudes which is related to tool motion, and not to the T2 distribution of the formation rocks.

To overcome this effect, the present invention utilises a mechanical arrangement which effectively decouples the NMR sensor from the motions of the drillstring. The sensor is then effectively stationary with respect to the formation and the magnetic field is invariant during the NMR measurement.

The NMR sensor is housed in a tubular assembly, mounted on the drill collar with bearings that decouple it from the motions of the drill collar. For reliability and performance, it is important that the sensor elements, such as magnets and RF coils, are mounted on a rigid frame made from high strength material, ideally metal such as titanium or non-magnetic high strength steel. It is therefore preferred that the entire sensor support structure is metal, such as stainless steel or titanium. However, the RF antenna will introduce localised parasitic eddy currents in the metallic structure of the sensor frame which can seriously impair RF efficiency. It is therefore necessary to consider how to minimise the impact of the all-metal structure on the RF field.

The arrangement that gives the best mechanical strength and RF efficiency is achieved by winding the RF antenna as a solenoid in an external recess as described in EP-A-0581666. The skin depth in stainless steel at the typical operating frequency of 0.5MHz is less than a few millimetres. Eddy currents will therefore flow in the surface of the drill collar under the RF coil, mirroring the driving current and effectively restricting the RF flux to the radial gap between the reduced drill collar outer diameter and the RF coil inner diameter. The RF coil diameter is made as large as possible consistent with the tool diameter, but it is desirable to make the coil recess as shallow as possible to minimise the loss in mechanical strength in this region. However, as the recess is made radially shallower, the gap decreases and the inductance of the RF transmit coil decreases, hence the RF field strength in the sensitive region for a fixed coil current decreases, hence requiring longer pulses, thus resulting in narrower bandwidth, reduced sensitive volume and lower signal strength. If the coil current is increased to compensate, the power requirement rises as the second power of current, so this too is undesirable. In practice the recess is made as deep as possible, consistent with adequate tool strength, and the loss in RF efficiency due to eddy currents is compensated by inserting soft ferrite into the gap between the RF coils and the recess base.

This places constraints on the design of the NMR sensor and can result in reduced mechanical strength. Therefore in a preferred embodiment the apparatus further comprises a recess formed in the support, the recess having a base and a pair of axially spaced shoulders, wherein the ferrite members are located at least partially in the recess; and one or more strengthening members which are arranged between the ferrite members, coupled to the base of the recess, and coupled to each shoulder of the recess. The strengthening member(s) increase the torsional and bending strength of the sensor frame. As a result the depth of the recess can be greater than in the prior art without decreasing the strength of the sensor frame.

Electromagnetic finite element analysis shows that the eddy currents flow around the strengthening member(s) and the perturbation to the RF field in the sensitive volume is minimal.

Typically the RF antenna comprises a coil which is wound over the ferrite members.

Typically the magnetic field generating assembly comprises a pair of axially spaced main tubular magnets having opposite pole orientation (i.e. like poles facing each other), and the RF antenna is located axially between the pair of main magnets. This provides a rotationally invariant radial static magnetic field which is important if the sensor rotates during the NMR measurement.

Additional RF power losses will occur if a dimension of the ferrite is large enough to support a standing wave between the boundaries made by the external faces of the ferrite. The lowest mode is a half wavelength. The wavelength ($\lambda$) is related to the RF frequency (f) and the speed of propagation of EM waves in the ferrite (v), which is in turn related to the ferrite's relative

permeability (μ) and permittivity (ε):

$$\lambda = \frac{v}{f} \qquad v = \frac{c}{\sqrt{\mu . \varepsilon}}$$

where c is the speed of light in vacuum. Selection of soft ferrite material with the correct combination of permeability and permittivity is therefore necessary.

Soft ferrites are all based on iron oxide compounds, but their properties are influenced by the other metallic ions in their structure. Soft ferrite used at less than 200MHz are typically of cubic spinel crystalline structure, with chemical composition $M^{2+} Fe_2^{3+}0_4$, where $M^{2+}$ represents a metallic ion and is either $Ni^{2+}$, $Mn^{2+}$, $Mg^{2+}$, $Zn^{2+}$, $Cu^{2+}$, $Co^{2+}$, or mixtures of these, most commonly MnZn and NiZn. These are commonly referred to as Manganese-Zinc ferrite and Nickel-Zinc ferrite. The NiZn ferrites have typically 10000 times higher resistivity than the MnZn ferrites, so are better suited to operation above 100kHz, due to their reduced eddy current loss. However, in addition, MnZn ferrites have electrical permittivity typically $10^5$, compared to about 100 for NiZn. Assuming a typical relative permeability of about 5000 for both types, the EM wave propagation velocity is therefore $1.3 \times 10^4$ m/s in MnZn ferrite and $4 \times 10^5$ m/s in NiZn ferrite. So at an operating frequency of about 0.5 MHz, a half wavelength is only 13mm in MnZn ferrite and 210 mm in NiZn. To avoid power losses due to dimensional resonances it is therefore preferred that the largest dimensions of any one piece of ferrite are less than these values. So it is necessary to make the ferrite section from a plurality of ferrite pieces with dimensions less than about 13mm in the case of MnZn and 120mm in the case of NiZn. The particular choice of ferrite material depends on many other characteristics, such as temperature dependence and saturation permeability.

The choice of soft ferrite material is further complicated by the property of magnetostriction exhibited by all ferrite. This phenomenon is a microscopic change in the physical dimensions of the ferrite under the influence of magnetic field. After the application of an RF pulse, the ferrite structure "rings" like a bell as stored energy dissipates. In a practical design it is necessary to minimise the amount and duration of ringing as too much ringing can disable the NMR receiver. The most accurate NMR measurements are made when RF pulses in a CPMG sequence are applied as rapidly as possible. As the NMR echo is acquired at a point in time midway between RF pulses, it is necessary to minimise the system "deadtime" - the time taken for the receiver system to recover from an RF pulse. A high degree of magnetostriction will increase the deadtime, so it is desirable that the ferrite used has a low coefficient of magnetostriction. Unfortunately, NiZn ferrite has a coefficient of magnetostriction 3 to 5 times greater than MnZn ferrite. Therefore, if MnZn ferrite is used, the individual pieces must be small enough such that dimensional resonances are not excited - less than about 13mm in all dimensions in the example given.

To avoid resonances in the MnZn ferrite shims it is preferred to keep all their dimensions below about 13mm. Therefore in a preferred embodiment the ferrite members are split into at least forty seven (in this example) arc segments (as the circumference of the soft ferrite ring shims described in the 8.75" outer diameter preferred embodiment tool is 62cm), and splitting them axially into separate axially spaced rings (at a spacing of less than 13mm) each comprising a plurality of separate arc segments.

Some embodiments of the present invention will now be described with reference to the accompanying drawings, in which:

> Figure 1 is a schematic cross-section of a NMR measurement-while-drilling tool drilling a borehole;
> Figure 2 is an enlarged view of part of Figure 1 but with a different clamping arm arrangement;
> Figure 3a is a schematic cross section of a NMR measurement-while-drilling tool indicating a borehole lobe.
> Figure 3b is a schematic cross section of a modified example showing embedded ferrite members and resultant borehole lobes; and
> Figures 4a and 4b are enlarged cross sections of Figures 3a and 3b in the region of the ferrite members.

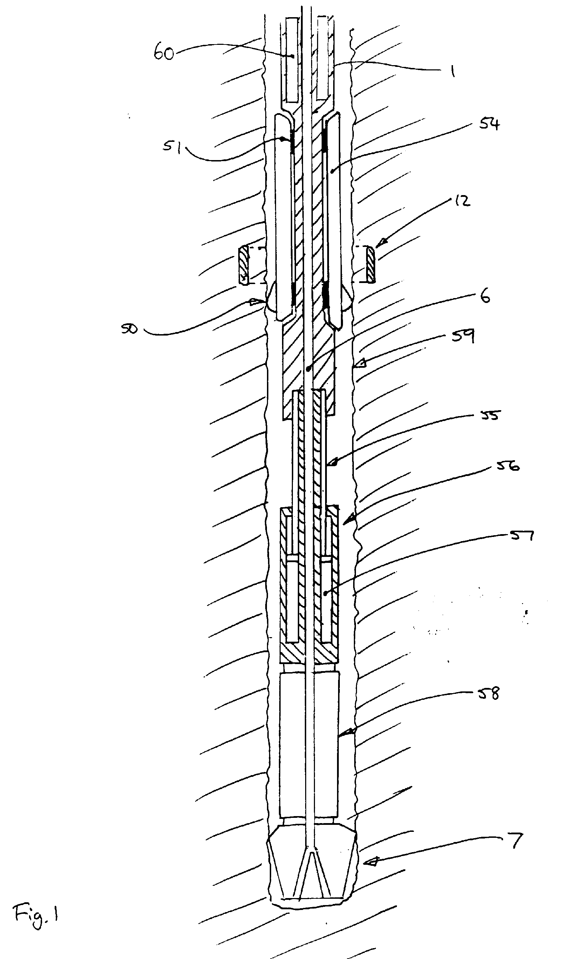

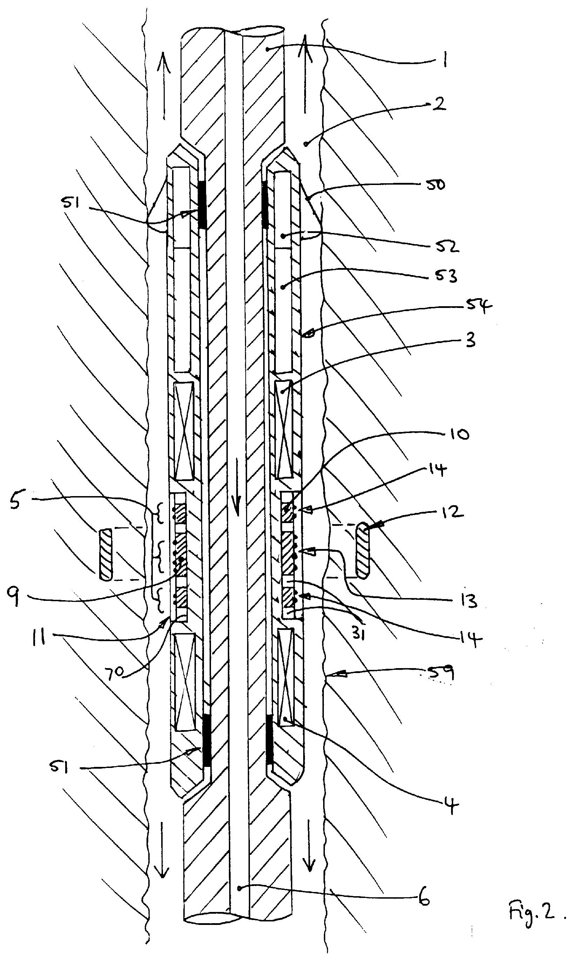

Referring to Figures 1 and 2, the tool has a drill head 7 at one end, and a sensor assembly 54 behind the drill head.

The sensor assembly 54 comprises a magnetic field generating assembly for generating a $B_0$ magnetic field (which is substantially time invariant over the duration of a measurement), and an RF system for transmitting and receiving RF magnetic pulses and echoes. The magnetic field generating assembly comprises a pair of axially spaced main magnets 3,4 (Figure 2) having opposite pole orientations (ie. with like magnetic poles facing each other), and three ferrite members 9,10 axially arranged between the main magnets 3,4. The ferrite members are made of "soft" ferrite which can be distinguished over "hard" ferrite by the shape of the BH curve which affects both intrinsic coercivity ($H_{cj}$, the intersection with the H axis) and initial permeability ($\mu_i$, the gradient in the unmagnetised case). Soft ferrite $\mu_i$ values typically range from 100 to 10000 whereas hard ferrite $\mu_i$ is about 1. Therefore the soft ferrite has large initial permeability (typically greater than 100, preferably greater than 1000). The permeability of the soft ferrite is chosen so that it is not saturated by the static magnetic field from the permanent magnetics. It will therefore couple to the RF magnetic fields from the receive and transmit antennas, shielding the antennas from eddy currents in the metallic sensor frame, 54, in the manner previously described, and enhancing the sensitivity of the antennas. The perturbation of the magnetic field by the ferrite is calculated and allowed for in the design. The RF system comprises a set of RF transmit antenna and RF receive antenna coil windings arranged as a central "field forming" solenoid group 13 and a pair of outer "coupling control" solenoid groups 14.

The tool has a mud pipe 60 with a clear central bore 6 and a number of exit apertures 61-64 to carry drilling mud to the bit 7, and the main body of the tool is provided by a drill collar 1. Drilling mud is pumped down the mud pipe 6 by a pump (not shown) returning around the tool and the entire tool is rotated by a drive (not shown).

Gaps in the pockets between the soft ferrite members are filled with non-conducting material which is not shown in Figure 1 (eg: ceramic or high temperature plastic) and the RF coils 13,14 are then wound over the soft ferrite members 9,10. The soft ferrites 9,10 and RF coil assembly 13,14 are pressure impregnated with suitable high temperature, low viscosity epoxy resin (not shown) to harden the system against the effects of vibration, seal against drilling fluid at well pressure, and reduce the possibility of magnetoacoustic oscillations. The RF coils 13,14 are then covered with wear plates 11 typically ceramic or other durable non-conducting material to protect them from the rock chippings flowing upwards past the tool in the borehole mud.

The torsional and bending strength of the frame is optionally improved by axial ribs or webs under the RF coils and non-conductive packing (e.g. plastic blocks or epoxy potting) 31 as shown in Figure 2.

When the clamps 50 are operated, the sensor assembly 54 is fixed with respect to the formation rocks. The collar 1 spins within the sensor assembly on bearings 51. The bearings have radial free-play to accommodate radial displacements of the collar with respect to the sensor and thus absorb vibration. The bearings also include an electromagnetic slip-ring (not shown) to transfer power to the sensor and NMR data back to the main MWD electronics 60. This data can be sent to the surface via a mud pulser (not shown). NMR measurements are made in the formation rocks in a sensitive region 12 during the period when the sensor assembly is clamped to the borehole wall 59 by hydraulically actuated clamps 50 (shown in alternate positions in Figures 1 and 2). During this period a thruster assembly 56 is activated: drilling mud is diverted from the through-bore 6 into a chamber 57 causing a splined piston 55 to extend, pushing the bit, 7 into the rock. The bit rotation can be driven independently from the drill collar by a mud motor 58. When the thruster is fully extended, the NMR measurements cease, the thruster hydraulic pressure is released and the drill string is lowered to retract the piston 55. During this time NMR measurements cannot be made. The clamp-release cycle is expected to last in the order 10 to 60 seconds, depending on drilling progress.

The primary advantage of clamping the sensor to the borehole wall during NMR measurements is to minimise the effect of vibration on the NMR signals.

In an alternative embodiment, not shown, the thruster 56 is omitted and the bearings 51 and slip ring are modified to allow for axial movement of the drill string relative to the sensor. A spring is included to return the sensor assembly to the start position when the clamps release at the end of a measurement cycle.

In a third alternative embodiment, not shown, an additional thruster can be fitted above the sensor assembly to de-couple the sensor from axial motions resulting from torsional loading of the drill string.

The central "field forming" solenoid group 13 comprises typically three positively wound transmit coil winding groups and two receive coil winding groups all wound in the same sense. Each winding group comprises a number of solenoidal turns.

Each "coupling control" solenoid group 14 comprises a pair of receive coil winding groups wound in the same sense as the field forming winding groups and a transmit coil winding group wound in the opposite sense. All coils in both groups allocated to the transmit coil are series connected as are all those allocated to the receive coil. The coil and number of turns positions are selected to produce substantially uniform axially oriented RF flux across the sensitive volume, thus creating conditions for NMR, whilst simultaneously cancelling the mutual inductance of the transmit and receive coils. The system of "zero-coupling coils" is described in EP-A-0837338. Furthermore, as also described in EP-A-0837288, the design of the twin RF coil system is such that it does not generate any NMR signal within the borehole region (for example, from vestigial borehole lobes). Consequently, the present invention does not require the use of gradient coils to cancel borehole signal, as described in EP-A-0581666 (Kleinberg).

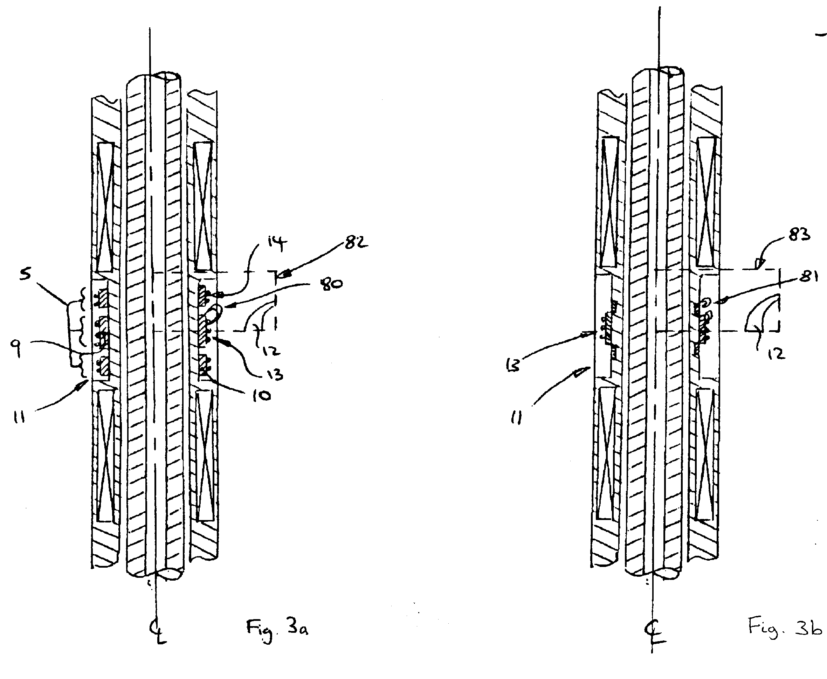

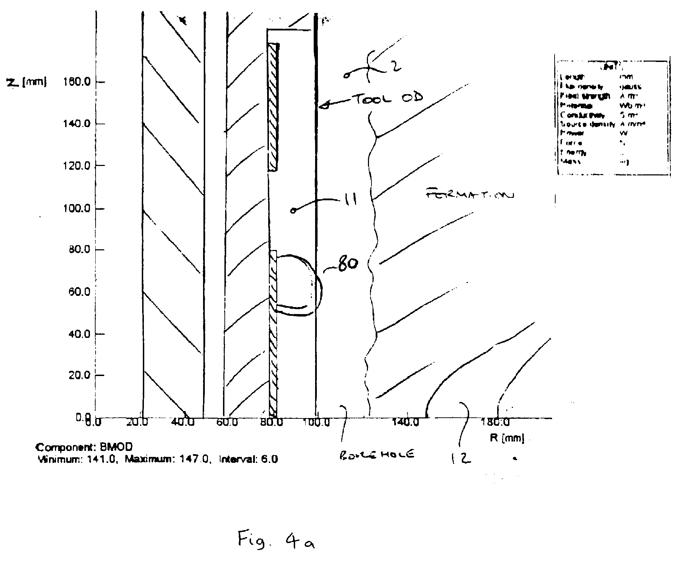

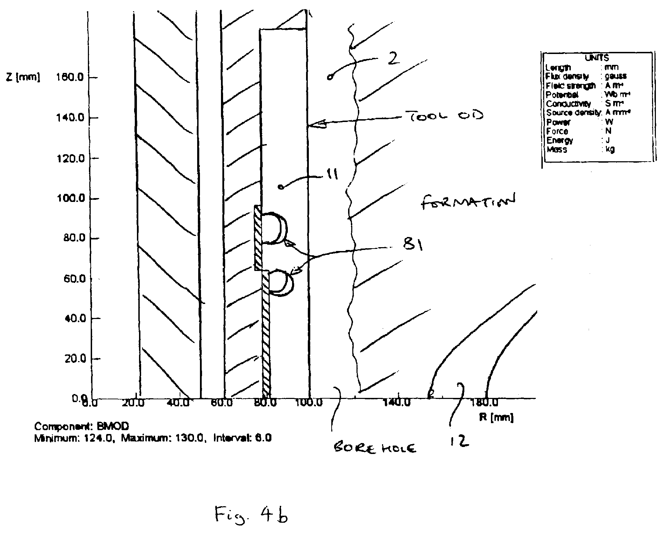

As an alternative to the RF coil system described herewith (which acts to destroy the unwanted borehole NMR signal by generating RF field profiles in the borehole region that de-phase the NMR from the resonant lobes in that region and is described in detail in co-pending application EP-A-0837338), an arrangement can be provided which ensures that no NMR signal arises from the borehole by arranging that the magnetic field strength at all points in the borehole is substantially different to the field strength in the sensitive zone within the formation rocks. In other words, the $B_0$ field "borehole lobes" are moved inside the sensor frame. This is achieved by putting a step into the central ferrite ring under the field forming coils. This causes a local cancellation of magnetic field and splits the single lobe 80 into two smaller lobes 81, neither of which encroaches outside the tool diameter. As there is no fluid inside the tool, no NMR signal is generated from these smaller lobes. This is shown clearly in Figures 4a and 4b which are detailed drawings showing the ferrite positions and extreme limits of the resonant zones (as defined by the RF bandwidth). Figures 3a and 3b respectively show the different arrangements in a more general view. The extents of the detailed views in Figures 4a and 4b are outlined, 82,83.

As a result of this simplification, complex RF coils are no longer required. It is possible to wind simple interleaved solenoids for the transmit and receive field coils as the signal cancellation properties of the original winding scheme are no longer needed. The coupling control coils and their associated ferrites are removed from the sensor completely and relocated in a separate section of the sleeve with the transmitter electronics, where they are wound as a simple ferrite core transformer.

More details and alternative configurations for the sensor assembly 54 together with details of suitable NMR electronics are described in EP-99300373.0.

## Claims

1. An apparatus for drilling a borehole and determining a parameter of interest of a formation surrounding a borehole during drilling, said apparatus comprising:

    (a) a longitudinal member adapted to be conveyed in a borehole; and
    (b) a sensor assembly including:

        (i) at least one NMR sensor for making NMR measurements relating to the parameter of interest, the sensor comprising a magnetic field generating assembly, an RF antenna, and a plurality of ferrite members which couple with RF magnetic fields transmitted or received by the RF antenna;
        (ii) at least one clamping device for engaging the borehole to clamp the sensor assembly to the borehole;

    wherein the sensor assembly is mounted via bearings to the longitudinal member so that the longitudinal member is free to move when the sensor assembly is engaged with the borehole.

2. The apparatus of claim 1 wherein the sensor assembly further comprises a flow path for returning mud.

3. The apparatus of claim 1 or claim 2, wherein the apparatus is adapted to be conveyed on a drillstring.

4. The apparatus of any of the preceding claims, wherein the at least one clamping device is selected from the group consisting of: (i) hydraulically operated, (ii) spring operated, and (iii) electrically operated.

5. The apparatus of any of the preceding claims, wherein the longitudinal member is a segment of drill pipe.

6. The apparatus of any of claims 1 to 4, wherein the longitudinal member is a shaft on a downhole directional drilling assembly.

7. Apparatus according to any of the preceding claims, further comprising a thruster assembly mounted to the longitudinal member for urging a drill bit in a drilling direction.

8. Apparatus according to any of claims 1 to 7, wherein the sensor assembly is slidably and/or rotatably mounted to the longitudinal member.

9. Apparatus according to any of the preceding claims, wherein the ferrite members are mounted on an elongate axially extending support, and the ferrite members are arranged around the axis of the support at the same axial position.

10. Apparatus according to claim 9, wherein the apparatus further comprises a recess formed in the support, the recess having a base and a pair of axially spaced shoulders, wherein at least some of the ferrite members are located at least partially in the recess.

11. Apparatus according to claim 10, further comprising one or more strengthening members which are arranged between the ferrite members, coupled to the base of the recess, and coupled to each shoulder of the recess.

12. Apparatus according to any of the preceding claims further comprising a drill head mounted at an axial end of the longitudinal member.

Fig. 1

Fig. 2.

Fig. 3b

Fig. 3a

9

Fig. 4a

Fig. 4b

**EP 1 072 903 A1**

European Patent Office

**EUROPEAN SEARCH REPORT**

Application Number

EP 99 30 5970

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | WO 99 45234 A (BAKER HUGHES INC) 10 September 1999 (1999-09-10) * page 2, line 19 - page 5, line 8 * --- | 1-8,12 | G01V3/32 G01V11/00 E21B17/10 E21B47/01 E21B17/07 E21B4/18 |
| X | DATABASE WPI Section Ch, Week 199934 Derwent Publications Ltd., London, GB; Class H01, AN 1999-403602 XP002126051 & NO 985 922 A (BAKER HUGHES INC), 21 June 1999 (1999-06-21) * abstract * -& GB 2 334 982 A (BAKER HUGHES INC) 8 September 1999 (1999-09-08) * page 7 - page 8 * * page 21 - page 24 * * figures 2,7A,7B,7C,7D * --- | 1-6,8,12 | |
| A | EP 0 581 666 A (SCHLUMBERGER SERVICES PETROL ;SCHLUMBERGER TECHNOLOGY BV (NL); SCH) 2 February 1994 (1994-02-02) * column 4, line 35 - line 44; figure 1 * ----- | 1-3,5, 9-12 | |

| | | | TECHNICAL FIELDS SEARCHED (Int.Cl.7) |
|---|---|---|---|
| | | | G01V E21B |

The present search report has been drawn up for all claims

| Place of search | Date of completion of the search | Examiner |
|---|---|---|
| THE HAGUE | 17 December 1999 | Häusser, T |

**ANNEX TO THE EUROPEAN SEARCH REPORT
ON EUROPEAN PATENT APPLICATION NO.**                          EP 99 30 5970

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-1999

| Patent document cited in search report | | Publication date | Patent family member(s) | | Publication date |
|---|---|---|---|---|---|
| WO 9945234 | A | 10-09-1999 | WO | 9945236 A | 10-09-1999 |
| NO 985922 | A | 21-06-1999 | GB | 2334982 A | 08-09-1999 |
| EP 0581666 | A | 02-02-1994 | DE | 69314261 D | 06-11-1997 |
| | | | DE | 69314261 T | 09-04-1998 |
| | | | DK | 581666 T | 27-10-1997 |
| | | | US | 5629623 A | 13-05-1997 |
| | | | US | 5557201 A | 17-09-1996 |
| | | | US | 5705927 A | 06-01-1998 |
| | | | US | 5914598 A | 22-06-1999 |
| | | | US | 5923167 A | 13-07-1999 |

EPO FORM P0459

For more details about this annex : see Official Journal of the European Patent Office, No. 12/82